Europäisches Patentamt

(19) European Patent Office

Office européen des brevets

(11) Publication number: **0 004 996**
**B1**

(12) **EUROPEAN PATENT SPECIFICATION**

(45) Date of publication of patent specification: **11.11.81**

(21) Application number: **79200186.9**

(22) Date of filing: **14.04.79**

(51) Int. Cl.³: **A 47 G 27/00,**
A 47 G 33/00, G 01 C 17/04

(54) Rectangular prayer rug.

(30) Priority: **20.04.78 CH 4253/78**

(43) Date of publication of application:
**31.10.79 Bulletin 79/22**

(45) Publication of the grant of the European patent:
**11.11.81 Bulletin 81/45**

(84) Designated Contracting States:
**BE CH DE FR GB IT LU NL SE**

(56) References cited:
**CH - A - 328 782**
**DE - A - 2 615 614**
**FR - A - 451 843**
**FR - A - 2 304 896**

(73) Proprietor: **Kamoo, Joseph N.**
**Avenue de la Vogeaz 10**
**CH-1110 Morges Canton of Vaud (CH)**

(72) Inventor: **Kamoo, Joseph N.**
**Avenue de la Vogeaz 10**
**CH-1110 Morges Canton of Vaud (CH)**

(74) Representative: **Bovard, Fritz Albert et al,**
**Bovard & Co Optingenstrasse 16**
**CH-3000 Bern 25 (CH)**

Courier Press, Leamington Spa, England.

Rectangular prayer rug

Moslems who say their prayers five times a day kneel when praying on a rectangular prayer rug the longitudinal axis of which should lie in the direction toward Mecca.

However, it is not always quite possible for the faithful to precisely ascertain such a direction from a place of prayer which can be far away from Mecca.

A compass disclosed in DE—A—26 15 614 attempts to solve this problem. The compass has symbols on its circumference representing different, geographically localized places of prayer, a symbol to indicate in relation to the chosen place of prayer the direction in which Mecca is geographically situated and a magnetic needle pointing to the magnetic North Pole and alignable by rotating the compass in a horizontal plane with the chosen place of prayer.

The direction toward Mecca is determined by the user of the compass in such a way that he turns on his own axis till the magnetic needle pointing to the magnetic North Pole is aligned with the chosen place of prayer plotted on the circumference of the compass dial whereby the symbol indicates the direction toward Mecca.

Besides that the turning on his own axis is rather inconvenient for the user of the compass, the problem of a quick and precise positioning of the prayer rug, the longitudinal axis of which should lie in the direction toward Mecca, is not solved by using such a compass.

In order to facilitate the implementation of this religious requirement of Islam, the person praying should have the possibility to adjust his prayer rug quickly and as far as possible precisely in the direction toward Mecca. This object of invention is achieved by a rectangular prayer rug characterized in that a magnetic compass is attached thereto for indicating in relation to any given place of prayer the direction in which Mecca is geographically situated, the compass having a symbol to indicate the direction toward Mecca, the longitudinal axis of said symbol coinciding with or being parallel with the longitudinal axis of the rug.

The prayer rug itself is advantageously made from an antistatic material.

This invention will now be described by way of example referring to the accompanying drawing in which

Fig. 1 shows a schematical top view of the prayer rug according to the invention,

Fig. 2 shows a top view of the instrument for indicating the direction toward Mecca and

Fig. 3 shows a top view of the instrument according to Figure 1 having another embodiment of the compass-card.

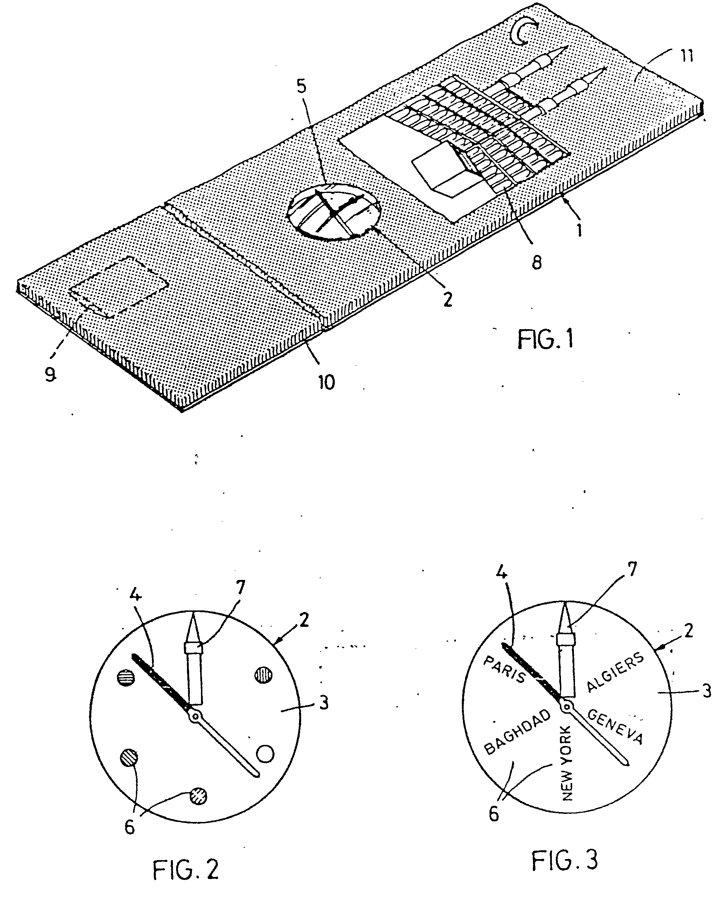

Figure 1 shows a rectangular prayer rug 1 which is made from an antistatic material and which is approximately 130 cm long, 50 cm wide and approximately 5—10 mm thick.

Usually, its lower surface is provided with an anti-skid layer 10. The upper surface 11 of the rug 1 on which the praying Moslem kneels has preferentially a green colour. The part of the rug 1 which is to be pointed in the direction toward mecca is provided with a picture 8 showing the Moslem holy shrine of Kaaba in Mecca.

There is provided in the longitudinal axis of the prayer rug 1 an instrument 2 for indicating the direction toward Mecca, in which direction the prayer rug 1 has to be put. The instrument 2 can, however, be positioned also on another place of the rug 1. The instrument is secured to the rug 1 and becomes an integral part thereof.

The instrument 2 for indicating the direction toward Mecca is a magnetic compass having a card 3 and a needle 4 freely rotating over the card and pointing to the magnetic north pole of the earth (see Figures 2 and 3). The compass-card 3 and the compass-needle 4 are encapsulated in a case 5 made of a transparent plastic material, which case is filled with a transparent fluid.

The lid of the case 5 is flush with the upper surface 11 of the prayer rug 1. There are provided several symbols 6 on the circumference of the compass-card 3 representing different prayer places which are preferentially geographically located in one state. The symbols 6 can show e.g. Cairo, Alexandria, Assuan, Matru etc. To enable the analphabets to identify such prayer places, they can be marked with different colours or other signs. There is further provided a symbol 7 on the circumference of the compass-card 3 for indicating the direction toward Mecca. This symbol can have e.g. the form of a minaret. Accordingly, there is besides the symbols 6 representing the places of prayer also one single symbol 7 on the compass-card 3 for indicating the direction toward Mecca. This symbol lies in the longitudinal axis of the prayer rug 1 or it can be positioned parallel with the same which depends on the place where the instrument 2 for indicating the direction toward Mecca is positioned on the rug 1.

A pocket 9 made of plastic material to contain a list of places of prayer is fixed to the lower surface of the prayer rug 1.

When the prayer rug 1 is to be adjusted in the direction toward Mecca, the following procedure has to be adapted:

The prayer rug 1 with the direction indicating instrument 2 secured thereto is to be rotated in the horizontal plane so long till the symbol 6 of the place of prayer where or in the vicinity of which the Moslem intends to say his prayer is aligned with the compass-needle 4 pointing to the magnetic north pole, i.e., till this symbol 6 of the place of prayer is covered by the compass-needle 4. Then, the symbol 7 for indicating the direction toward Mecca which lies in the longitudinal axis of the prayer rug 1 or is coaxially positioned to the same shows in direction toward Mecca.

In this way it is no more necessary for the Moslem to look after the right direction in which mecca is geographically situated. He can be sure that the longitudinal axis of the so adjusted prayer rug 1 lies from his place of prayer in the direction toward Mecca.

## Claims

1. A rectangular prayer rug (1) on which the Moslem has to say his daily prayers, characterized in that a magnetic compass (2) is attached thereto for indicating in relation to any given place of prayer the direction in which Mecca is geographically situated, the compass (2) having a symbol (7) to indicate the direction toward Mecca, the longitudinal axis of said symbol (7) coinciding with or being parallel with the longitudinal axis of the rug (1).

2. A prayer rug according to claim 1, made from an antistatic material.

## Revendications

1. Tapis de prière rectangulaire (1) sur lequel le musulman s'agenouille pour dire ses prières journalières, caractérisé en ce qu'une boussole (2) est attachée au tapis de manière à indiquer la direction géographique dans laquelle La Mecque est située, en liaison avec n'importe quel emplacement de prière, la boussole comportant un repère (7) qui indique la direction de La Mecque et dont l'axe longitudinal est orienté parallèlement ou confondu avec l'axe longitudinal du tapis (1).

2. Tapis de prière selon la revendication 1, caractérisé en ce qu'il est fait d'un matériau anti-statique.

## Patentansprüche

1. Rechteckiger Gebetsteppich (1), auf welchem der Moslem in Richtung auf Mekka kniend seine täglichen Gebete verrichtet, dadurch gekennzeichnet, dass an ihm ein magnetischer Kompass (2) zum Anzeigen der Richtung, in welcher sich mit Bezug auf den beliebigen Gebetsort die geographische Lage von Mekka befindet, befestigt ist, welcher Kompass mit einem Symbol (7) versehen ist, dessen Längsachse in der Längsachse des Teppichs (1) oder parallel zu derselben liegt.

2. Gebetsteppich nach Patentanspruch 1, dadurch gekennzeichnet, dass er aus einem antistatischen Material besteht.

FIG.1

FIG. 2

FIG. 3